# EUROPEAN PATENT APPLICATION

(11) **EP 1 418 393 A1**
(43) Date of publication of application: **12.05.2004**
(21) Application number: 02257766.2
(22) Date of filing: 08.11.2002
(51) Int. Cl.: F25J 1/02

(54) **A process for the liquefaction of a gaseous mixture**

(71) Applicant: EUROPEAN COMMUNITY, 1049 Brussels (BE)
(72) Inventor: Valkiers, Staf, 2440 Geel (BE); Agrebe, Yetunde, 2400 Mol (BE); Van Baelen, Guido, 2400 Mol (BE); Russe, Katrin, 2400 Mol (BE)
(74) Representative: Freylinger, Ernest T.

(57) **Abstract**

A process for the liquefaction of a mixture of two or more gas samples, the method comprising:
- (i): providing a first container defining a volume for containing a cooling medium;
- (ii): providing a second container defining a sealed or sealable volume for containing two or more gas samples, which volume is thermally coupled to the volume of the first container so as to allow heat transfer therebetween;
- (iii): introducing a cooling medium into the volume of the first container;
- (iv): reducing the pressure in a region of the volume of the first container above the cooling medium whereby the temperature of the cooling medium is reduced; and
- (v): introducing two or more gas samples into the volume of the second container, wherein said samples are condensed by the action of the cooling medium.

## Description

The present invention relates to a process for the production of a mixture of two or more gas samples and, in particular, to a process for the preparation gaseous mixtures of synthetic isotopes.

Measurement of the isotopic content of, for example, carbon, oxygen, sulfur, hydrogen or nitrogen is of great importance in many technical fields including geochemistry, environmental sciences, food authenticity, clinical applications and climate studies.

Gases are widely used for the precise measurement of differences in the isotopic composition of an unknown sample compared to a known reference. These are known as "δ-measurements''. For example, the results of such measurements for oxygen may be expressed on the δ¹⁸O-scale (°/ₒₒ) with the Vienna Standard Mean Ocean Water (V-SMOW) adapted as the zero point of this internationally recognised scale.

As will be appreciated, the comparison of results obtained by different laboratories is essential. While measurements on the δ-scale are very useful for this purpose, they refer to a prepared artefact (example: V-SMOW). The δ-scale is not anchored through values, gained through accurate (absolute) measurements of isotopes, to fundamental, inalterable constants in nature. In order to achieve reliable measurements and comparison of results, direct measurement is therefore necessary. This requires the preparation of synthetic isotope gas mixtures.

A number of problems are associated with the preparation of high accuracy gaseous mixtures of synthetic isotopes (needed to calibrate a mass spectrometer at the < 5.10⁻⁴ level). These include isotope effects, the loss of precious (highly expensive and rare) material, and the risk of introducing impurities. As a consequence, low temperature gas transfer is often used in preparing such gaseous mixtures.

Regular cooling with liquid nitrogen is insufficient to prepare, for example, a suitable synthetic gas mixture of ¹³CF₄ and ¹²CF₄ (used for bracketing the natural isotopic composition of carbon, ratio ¹³C/¹²C = 0.0111) . This is because the boiling point of CF₄ is 183.89°C at atmospheric pressure, and the vapour pressure of CF₄ at liquid nitrogen temperatures is approximately 5 Pa. This is too high for the preparation of high accuracy gaseous mixtures of synthetic isotopes. A similar problem exists for complete mixing of the 3 oxygen components (¹⁶O₂, ¹⁷O₂ and ¹⁸O₂) for the preparation of synthetic oxygen mixtures.

It is known to separate mixtures of vapours or gases into different phases cryogenically by applying slushes of specific temperature over a cold trap. Slushes are produced by pouring liquid nitrogen into a dewar filled with a particular material, while continuously stirring until the desired consistency or temperature is reached. Alternatively, a fluid material may be cooled to a specific temperature without forming a proper slush. The temperature of the cooling fluid must then be monitored carefully owing to the relatively rapid increase in temperature.

Cryogenic traps are used to transport gases in vacuum systems, to separate gases in mixtures, and to remove contaminants from gases. Freyer & Kobel (1975) designed a cold trap with liquid helium for freezing µL size samples of N₂, O₂ and CO₂. Cooling of cold traps is also possible using dry ice (solid CO₂), liquid nitrogen and liquid helium.

In a first aspect, the present invention provides a process for the production of a mixture of two or more gas samples, the method comprising:
(i) providing a first container defining a volume for containing a cooling medium;
(ii) providing a second container defining a sealed or sealable volume for containing two or more gas samples, which volume is thermally coupled to the volume of the first container so as to allow heat transfer therebetween;
(iii) introducing a cooling medium into the volume of the first container;
(iv) reducing the pressure in a region of the volume of the first container above the cooling medium whereby the temperature of the cooling medium is reduced; and
(v) introducing two or more gas samples into the volume of the second container, wherein said samples are condensed by the action of the cooling medium.

The cooling medium will typically comprise a liquefied gas and examples include liquid nitrogen and liquid helium. However, it is envisaged that a cooling medium of, for example, solid carbon dioxide could be used.

The two or more gas samples will typically exhibit a non-negligible vapour pressure at the cooling medium temperature under normal conditions (i.e. in the absence of the reduced pressure; this will typically be at or around atmospheric pressure). For example, a non-negligible vapour pressure will typically be ≥ 10⁻³Pa, more typically ≥ 10⁻² Pa, still more typically ≥ 10⁻¹ Pa. The action of reducing the pressure in the first container is preferably such so as to reduce the temperature of the cooling medium to less than -200°C, preferably less than -205°C, more preferably from -207 to -210°C, still more preferably approximately -209°C. At these reduced temperatures, the two or more gas samples will typically exhibit negligible vapour pressure. For example, a negligible vapour pressure will typically be < 10⁻³Pa, more typically ≤ 10⁻⁴Pa. As an example, a temperature of approximately -209°C is sufficient for complete condensation (or at least substantially complete condensation) of CF₄ (at approximately -209°C, the vapour pressure of CF₄ ≈ < 10⁻⁴Pa) .

The step of reducing the pressure in the first container may be achieved by any suitable means, for example a vacuum pump. This will typically reduce the pressure to less than atmospheric pressure. Reduced pressures of up to 10⁻² mbar may suitably be used, more preferably up to 10⁻³ mbar, still more preferably up to 10⁻⁴ mbar.

The process also preferably involves monitoring the temperature, either directly or indirectly, of the volume of the first container and/or the volume of the second container. In this case, the pressure in the first container is advantageously operably responsive to said means for monitoring the temperature. Accordingly, the pressure in the first container may be adjusted or maintained depending upon the temperature of the first container and/or the second container.

The temperature may be monitored by any suitable means, for example one or more temperature sensors, which will typically be coupled to a controller. Such an arrangement, in combination with the means for adjusting the pressure in the first container, makes it possible to monitor the temperature of the second container and adjust the pressure accordingly until the desired temperature is achieved. At that time, the temperature may be maintained and the two or more gas samples may be mixed in the volume of the second container.

Preferably, the cooling medium in the first container is agitated by, for example, a stirrer such as a magnetic stirrer.

The volume of the second container is thermally coupled to the volume of the first container so as to allow heat transfer therebetween. In this manner, the contents of the second container can be cooled by the cooling medium contained in the first container. To achieve this, at least a portion of the second container is preferably disposed in the volume defined by the first container to thermally contact with the cooling medium. The first container may therefore comprise a housing having a port for the second container.

The process may advantageously be used for preparation of a synthetic isotope gas mixture.

The second container is preferably sealably connected or connectable to two or more gas sample source(s). The two or more gas sample source(s) may comprise a first source of an isotope of a gas and a second source of a different isotope of that gas. For example, the two or more gas samples may comprise or consist of a first gas sample of ¹²CF₄ and a second gas sample of ¹³CF₄ (i.e. isotopes of C). While both of ¹²CF₄ and ¹³CF₄ have a small vapour pressure at the liquid nitrogen temperature of -196°C, this vapour pressure is sufficient to result in incomplete mixing of the gases: for complete mixing of both gases it is necessary to fully condense the gases, i.e. freeze out everything. At -206°C both gases have no detectable vapour pressure so that the uncertainty contribution due to fractionation effects is no longer a problem. This fact may be confirmed using a high accuracy gas isotope mass spectrometer. The process may also be applied to ¹⁶O₂, ¹⁷O₂ and ¹⁸O₂.

The first container is preferably connected or connectable to a source of the cooling medium. This enables the first container to be filled with the cooling medium. Additionally, it facilitates replenishment of the cooling medium, which may evaporate during the course of the process owing to the reduced pressure in the first container. In particular, the reduced pressure can result in an increase in the evaporation of the cooling medium. The source of the cooling medium preferably comprises a source of a liquefied cooling gas such as liquid nitrogen.

The process may further involve collecting the mixed two or more gas samples from the second container.

Once the mixture is ready, i.e. once the second container has been filled with the gases, the container may be disconnected from the system for measurement (The isotope amount ratios in the mixture are measured and compared to gravimetrically prepared isotope ratios. So the correction factors with all its know systematic unknown effects can be calculated). A new container may then be connected to the system and another mixture may be made in a similar manner. Preferably, at least three mixtures are made for each calibration.

In the process according to the present invention, the gases are brought together and then an accurate weighing is made (all without isotope effects).

The process may be carried out using the apparatus as herein described.

In a second aspect, the present invention provides an apparatus for mixing together two or more gas samples in which said samples are condensed by the action of a cooling medium, the apparatus comprising:
(a) a first container defining a volume for holding a cooling medium;
(b) a second container defining a sealed or sealable volume for containing two or more gas samples, which volume is thermally coupled to the volume of the first container so as to allow heat transfer therebetween;
(c) means for adjusting the pressure in the first container; and
(d) means for introducing two or more gas samples into the volume of the second container, wherein, in use, said samples are condensed by the action of the cooling medium.

The means for adjusting the pressure may comprise vacuum producing means for reducing, in use, the pressure in a region of the first container above the cooling medium. This may be achieved using a vacuum pump. Advantageously, the first container has an outlet for sealing connection to the vacuum pump.

The first container is preferably a thermally insulated container such as a dewar. In use, the container may be filled to about 4/5 of its volume with, for example, a liquefied cooling gas such as liquid nitrogen. By creating a vacuum in the closed container (in the region above the level of the liquefied cooling gas), the transfer of nitrogen molecules from the liquid phase to the gas/vapour phase is enhanced. During this process the temperature of the remaining liquid phase decreases. In the case of liquid nitrogen, it takes typically approximately 10 to 20 minutes to reduce the temperature to approximately -209°C and this temperature can typically be maintained for up to 20 minutes, which is sufficient time to prepare the gaseous mixture.

The apparatus preferably further comprises means for monitoring the temperature, either directly or indirectly, of the volume of the first container and/or the volume of the second container. In this case, the means for adjusting the pressure in the first container is preferably operably responsive to the means for monitoring the temperature.

The means for monitoring the temperature will typically comprise one or more temperature sensors, which will typically be coupled to a controller. Such an arrangement, in combination with the means for adjusting the pressure in the first container, makes it possible to monitor the temperature of the first and/or second container(s) and adjust the pressure accordingly until the desired temperature is achieved. At that time, the temperature may be maintained and the two or more gas samples may be mixed in the volume of the second container. In particular, a controller may be coupled to the means for adjusting the pressure and the means for monitoring the temperature. A desired reference temperature is inputted and the controller then instructs the means for adjusting the pressure based on feed-back from the means for monitoring the temperature.

The first and/or second container(s) may comprise(s) a housing having a port for at least one temperature sensor. The temperature sensor may comprise a thermocouple.

If the cooling medium is a liquefied gas, then the apparatus preferably further comprises means for agitating, in use, the liquefied cooling gas in the first container. This may comprise a stirrer, preferably a magnetic stirrer. Stirring the liquefied cooling gas facilitates the transformation of the liquid phase into the gas/vapour phase under the reduced pressure. The corollary of this is a reduction in the temperature of the remaining liquid phase.

The second container will typically be thermally coupled to the first container through the cooling medium. Preferably, at least a portion of the second container is disposed in the volume defined by the first container to thermally contact, in use, with the cooling medium. In this manner, the second container is thermally coupled to the first container and this enables heat to be transferred between the contents of the two containers. The first container may therefore comprise a housing having a port for the second container.

The apparatus may advantageously be used to prepare a synthetic isotope gas mixture. The apparatus may further comprise means to weigh the gases.

The second container is preferably sealably connected or connectable to two or more gas sample source(s). In this case, the two or more gas sample source(s) may comprise a first source of an isotope of a gas and a second source of a different isotope of that gas. For example, the first source may be ¹²CF₄ and second source may be ¹³CF₄.

The first container is preferably connected or connectable to a source of the cooling medium, for example a liquefied cooling gas such as a source of liquid nitrogen.

The apparatus may further comprise means for collecting the mixed two or more gas samples from the second container.

In a preferred embodiment, the apparatus comprises a dewar (i.e. the first container) with a teflon lid having an opening in the centre for insertion of the mixing cylinder (i.e. the second container) into the interior of the dewar. Four more apertures/ports are provided in the lid, one for a temperature sensor, one to avoid uncontrolled pressure rises, one for introducing liquid nitrogen into the dewar, and finally one for connecting to a vacuum pump. The dewar is placed on a magnetic stirrer and connected to a mechanical vacuum pump for evacuation.

The apparatus may be used in the process/method as herein described.

In another aspect, the present invention provides a method of preparing a mixture of ¹²CF₄ and ¹³CF₉, the method comprising:
(A) providing a first container containing liquid nitrogen;
(B) providing a second container defining a sealed or sealable volume for containing a mixture of ¹²CF₄ and ¹³CF₄, which volume is thermally coupled to the liquid nitrogen in the first container so as to allow heat transfer therebetween;
(C) reducing the pressure in a region of the first container above the liquid nitrogen whereby the temperature of the liquid nitrogen is reduced to less than -200°C; and
(D) introducing ¹²CF₄ and ¹³CF₄ gas samples into the volume of the second container, wherein said samples are condensed by the action of the liquid nitrogen to the extent that the vapour pressure of the gas samples is negligible.

The complete condensation (or at least the substantially complete condensation) is necessary to prepare accurate mixtures.

The temperature of the liquid nitrogen is preferably reduced to from -205 to -210°C, more preferably from -207 to -210°C.

The method of preparing the gas mixture is preferably based on gravimetric mixing.

In another aspect, the present invention provides a method of preparing a mixture of two or more gas samples, the method comprising:
(a) providing a first container defining a volume containing a cooling medium, said cooling medium having a temperature T1 at a pressure P1;
(b) providing two or more gas samples that exhibit a non-negligible vapour pressure at said temperature T1 and negligible vapour pressure at a temperature T2;
(c) providing a second container defining a sealed or sealable volume for containing the two or more gas samples, which volume is thermally coupled to the volume of the first container so as to allow heat transfer therebetween;
(d) adjusting the pressure in the first container above the cooling medium to a pressure P2, whereby the temperature of the cooling medium is altered to T2; and
(e) introducing the two or more gas samples into the volume of the second container, wherein said samples are condensed by the action of the cooling medium.

In this method it will be appreciated that the pressure may be raised or lowered to raise or lower the temperature of the cooling medium, which will typically be a liquefied cooling gas as herein described. Again, the method of preparing the gas mixture is preferably based on gravimetric mixing.

### Example

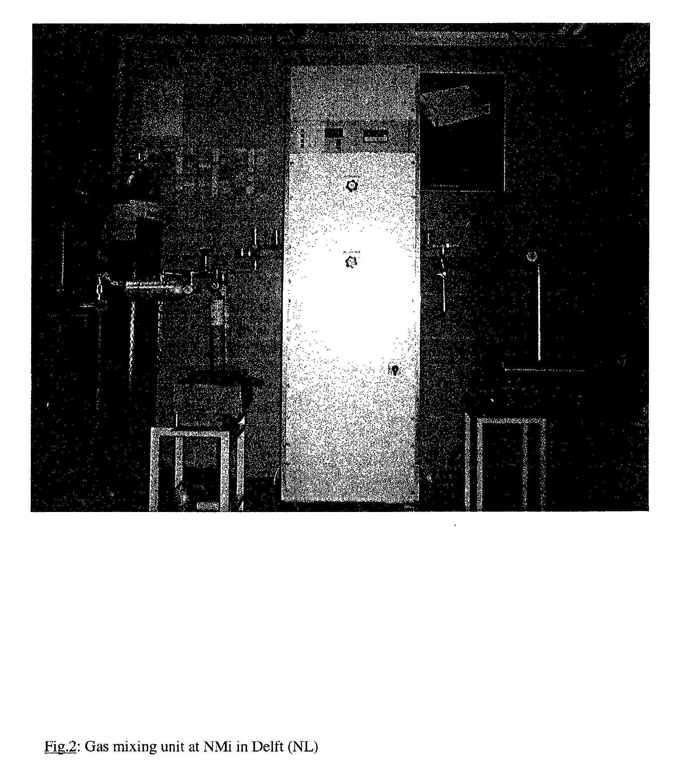

For the preparation of synthetic isotope mixtures from enriched ¹²CF₄ and ¹³CF₄ (Fig.2), equipment for gas handling, weighing and isotope mixing at IRMM Geel and at NMI Delft (NL) were used.

The highly enriched parent gases, ¹²CF₄ and ¹³CF₄, were mixed in such a way that the prepared *n*(¹³CF₄) / *n*(¹²CF₄) ratio of the mixtures reflected the carbon ratio as measured in real samples.

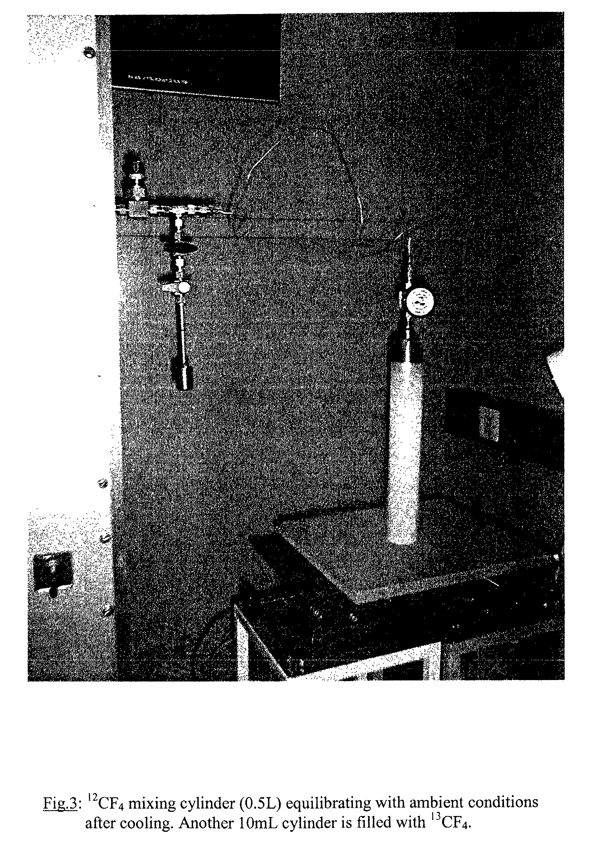

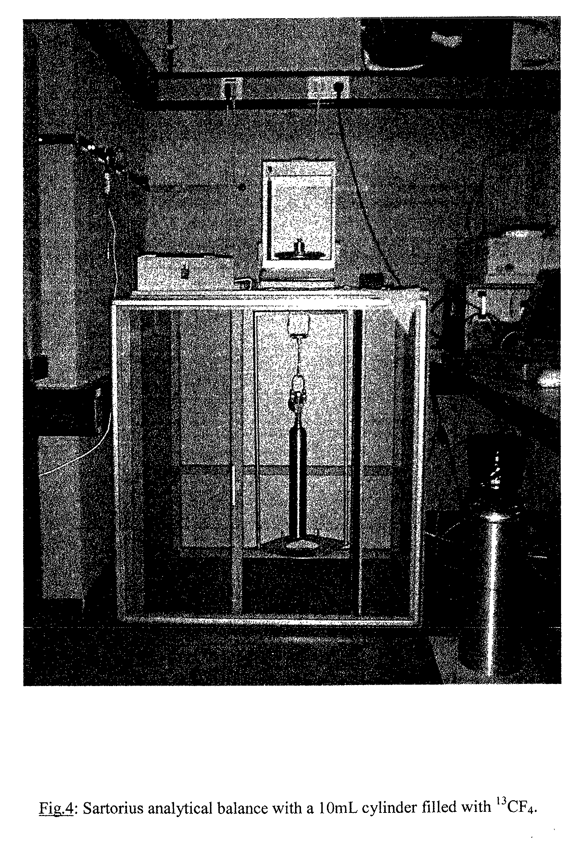

The procedure is as follows:
1. Measurement of the isotope composition of the enriched ¹²CF₄ and ¹³CF₄ parent gases and their impurities at IRMM-Geel.
2. Gravimetric preparation of the mixtures at NMI-Delft. In order to prepare mixtures as close as possible to the envisaged *n* (¹³CF₄) /*n* (¹²CF₄) ratios, the "fill station" at NMI was configured and used as a kind of volumetric line in which the actual pressure in the line acted as a targeting tool (Fig.2.).
3. The gas transfer from one cylinder (Fig.3 and 4) to the other is important for the successful preparation of the CF₄ mixtures. This is achieved by cooling of the gas transfer cylinders down to -209°C.
4. The mixing and weighing procedure result in *m* (¹²CF₄) and *m* (¹³CF₄) to the smallest achievable uncertainly.
5. The isotope ratios of the prepared CF₄ mixtures calculated at IRMM using GUM workbench.
6. The prepared CF₄ mixtures were measured at IRMM using the MAT271 "Avogadro" mass spectrometer.
7. Finally correction factors for residual unknown errors *K*ᵣₑₛ = *R*ₚᵣₑₚ/*R*_{obs} were deduced form the prepared and observed isotope ratios of the mixtures.

For the preparation of the CF₄, and also oxygen synthetic mixtures, gas transfer (i.e. a gravimetric mixing of the ¹³CF₄ and ¹²CF₄ gases) is carried out at a low temperature (approximately -209°C = 64 K) using the process/method and apparatus as herein described.

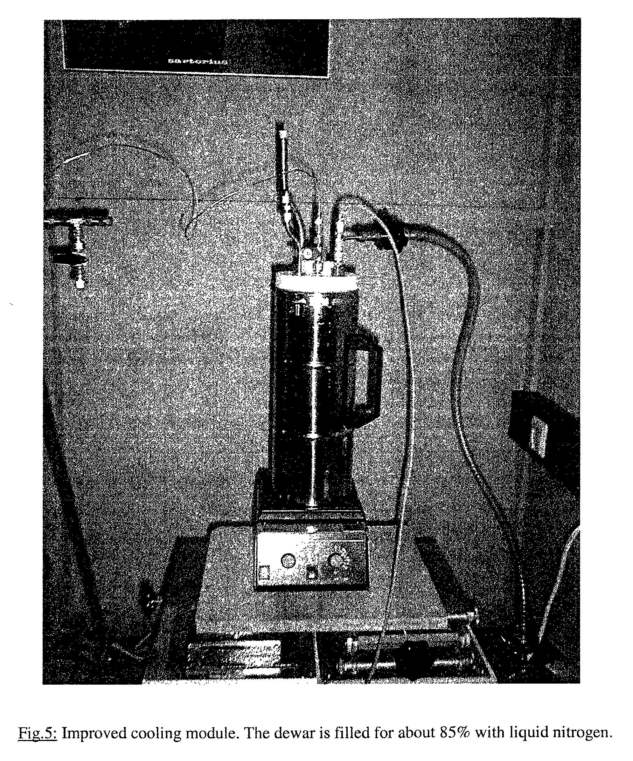

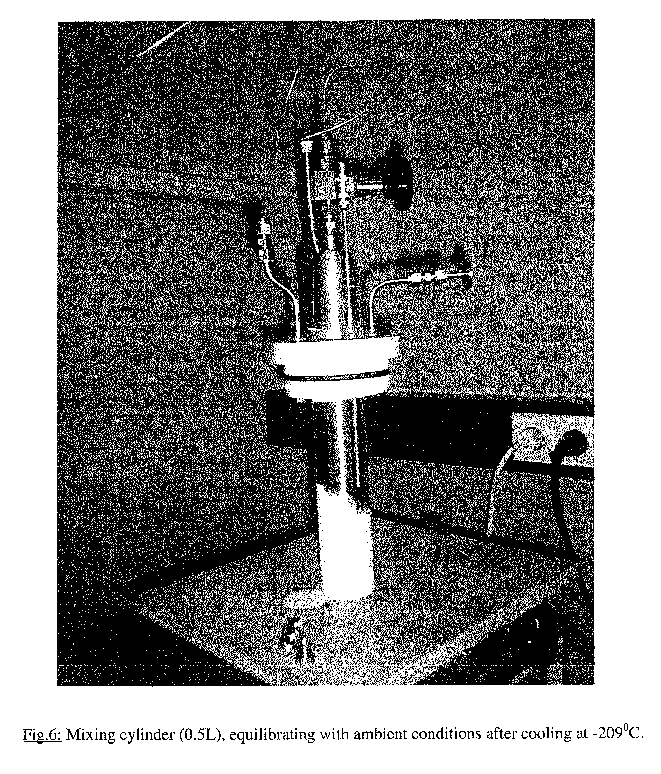

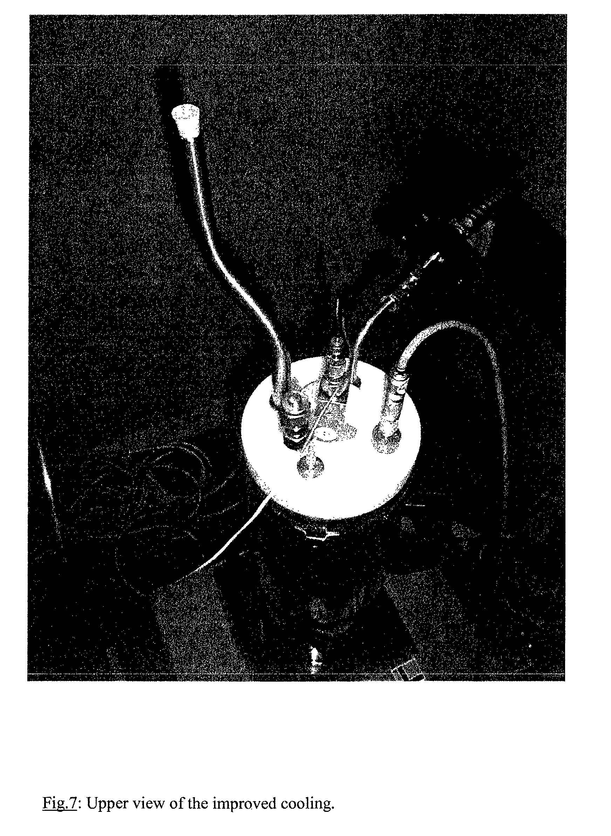

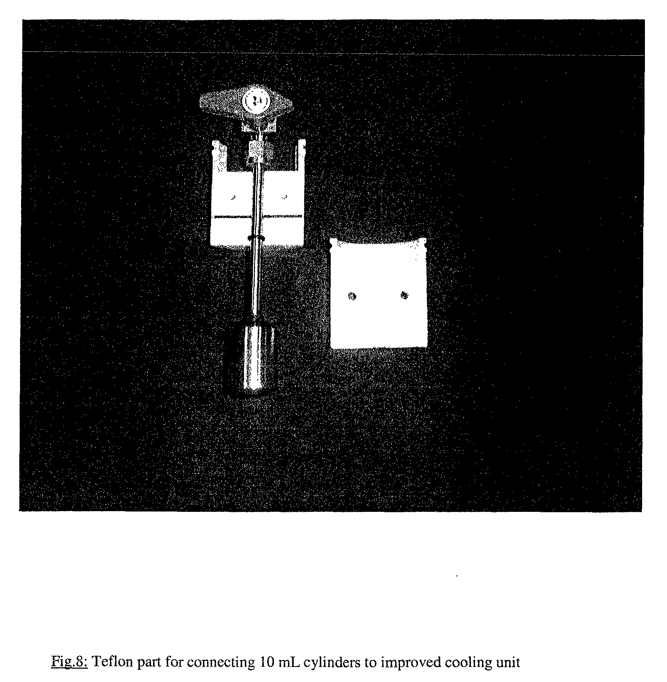

The system (see Figures 5 and 6) consists of a 2 L metal dewar with a teflon lid. The thickness of the lid is about 5cm and a larger opening in the centre is provided, which corresponds to the dimension of the mixing cylinder. Four more apertures are provided in the lid (see Figure 7): one for low temperature monitoring, one for filling liquid nitrogen (when required), one to avoid an uncontrolled pressure rise, and one for connection to a rotary pump (type Alcatel 2002B). The dewar contains a magnetic stirrer and the whole system is placed on a rotator.

Before closing the system, the dewar is filled with liquid nitrogen and the safety stopper removed. This is important because, during the first minutes of cooling, the gaseous nitrogen needs to evaporate in order to keep the pressure in the dewar under control. After about 10 min of cooling time (the inner system is now at about liquid nitrogen temperature) more liquid nitrogen is introduced via the filling system until the dewar is filled again to about 85% of its maximum level.

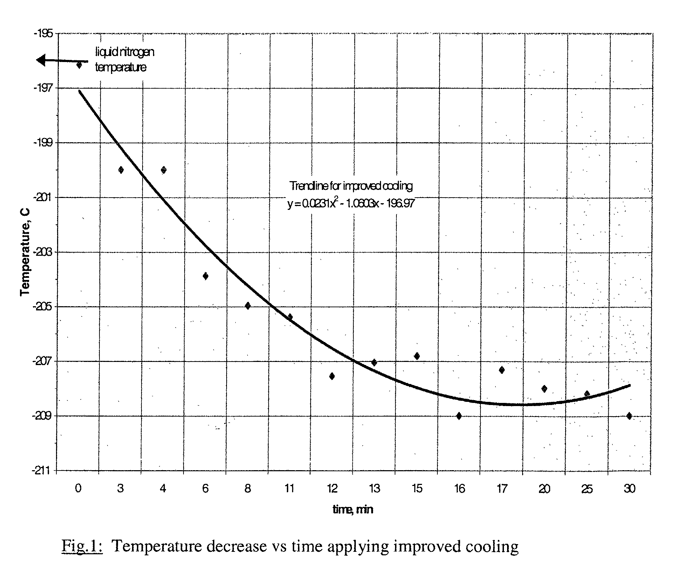

The filling system is now closed by a Swagelok connection (¼"), the security stopper is fixed in place, and the pump is activated. A small rotary pump (2m³/h) is used for this purpose, it creates a vacuum in the gas phase that enhances transfer of the nitrogen molecules from the liquid phase to the gas/vapour phase. The result of this operation is a significant decrease of the liquid nitrogen temperature in the dewar. In approximately 5 minutes the temperature decreases steadily to about -205°C, and goes exponentially down in the next 8-10 min to approximately -209°C (Fig. 1). This temperature can be kept constant for at least 20 minutes. The whole system is placed on a magnetic rotator to homogenise the liquid nitrogen.

In case of ¹³CF₄ and ¹²CF₄, freezing both gases together for approximately 20 min at -209°C is sufficient to make a synthetic isotope mixture without any substantial isotope effect. This has been demonstrated by mass spectrometry.

For safety precautions, the dewars (Isotherm) used in the system are preferably made of metal. The imposed 10⁻² mbar vacuum in the gas phase could damage an ordinary dewar made of glass.

## Claims

1. A process for the production of a mixture of two or more gas samples, the method comprising:
(i) providing a first container defining a volume for containing a cooling medium;
(ii) providing a second container defining a sealed or sealable volume for containing two or more gas samples, which volume is thermally coupled to the volume of the first container so as to allow heat transfer therebetween;
(iii) introducing a cooling medium into the volume of the first container;
(iv) reducing the pressure in a region of the volume of the first container above the cooling medium whereby the temperature of the cooling medium is reduced; and
(v) introducing two or more gas samples into the volume of the second container, wherein said samples are condensed by the action of the cooling medium.

2. A process as claimed in claim 1, wherein the two or more gas samples exhibit a non-negligible vapour pressure at the cooling medium temperature under normal conditions.

3. A process as claimed in claim 1 or claim 2, wherein the cooling medium comprises a liquefied cooling gas, preferably liquid nitrogen.

4. A process as claimed in any one of the preceding claims, wherein the temperature of the cooling medium is reduced to less than -200°C, preferably less than -205°C, more preferably from -207 to -210°C.

5. A process as claimed in any one of the preceding claims, wherein the temperature of the volume of the first container and/or the volume of the second container is/are monitored either directly or indirectly.

6. A process as claimed in claim 5, wherein the pressure in the first container is operably responsive to said means for monitoring the temperature.

7. A process as claimed in any one of the preceding claims, wherein the cooling medium comprises a liquefied cooling gas and is agitated in the first container.

8. A process as claimed in any one of the preceding claims, wherein at least a portion of the second container is disposed in the volume defined by the first container to thermally contact with the cooling medium.

9. A process as claimed in any one of the preceding claims which is a process for preparation of a synthetic isotope gas mixture.

10. A process as claimed in any one of the preceding claims, wherein said two or more gas samples comprise or consist of a first gas sample of ¹²CF₄ and a second gas sample of ¹³CF₄.

11. A process as claimed in any one of the preceding claims, further comprising the step of collecting the mixed two or more gas samples from the second container.

12. An apparatus for mixing together two or more gas samples in which said samples are condensed by the action of a cooling medium, the apparatus comprising:
(a) a first container defining a volume for holding a cooling medium;
(b) a second container defining a sealed or sealable volume for containing two or more gas samples, which volume is thermally coupled to the volume of the first container so as to allow heat transfer therebetween;
(c) means for adjusting the pressure in the interior of the first container; and
(d) means for introducing two or more gas samples into the volume of the second container, wherein, in use, said samples are condensed by the action of the cooling medium.

13. An apparatus as claimed in claim 12, further comprising means for monitoring the temperature, either directly or indirectly, of the volume of the first container and/or the volume of the second container.

14. An apparatus as claimed in claim 13, wherein said means for adjusting the pressure in the interior of the first container is operably responsive to said means for monitoring the temperature.

15. An apparatus as claimed in claim 13 or claim 14, wherein said means for monitoring the temperature comprises one or more temperature sensors optionally coupled to a controller.

16. An apparatus as claimed in any one of claims 12 to 15, wherein said means for adjusting the pressure comprises vacuum producing means for reducing, in use, the pressure in a region of the first container above the cooling medium.

17. An apparatus as claimed in claim 16, wherein said vacuum producing means comprises a vacuum pump, and wherein the first container has an outlet for sealing connection to the vacuum pump.

18. An apparatus as claimed in any one of claims 12 to 17, further comprising means for agitating, in use, the cooling medium in the first container, said means preferably comprising a stirrer, more preferably a magnetic stirrer.

19. An apparatus as claimed in any one of claims 12 to 18, wherein at least a portion of the second container is disposed in the volume defined by the first container to thermally contact, in use, with the cooling medium.

20. An apparatus as claimed in any one of claims 12 to 19, wherein the second container is sealably connected or connectable to two or more gas sample source(s).

21. An apparatus as claimed in claim 20, wherein said two or more gas sample source(s) comprises a first source of an isotope of a gas and a second source of a different isotope of said gas.

22. An apparatus as claimed in claim 21, wherein said first source is ¹²CF₄ and second source is ¹³CF₄.

23. An apparatus as claimed in any one of claims 12 to 22, wherein the first container is connected or connectable to a source of the cooling medium, preferably a source of a liquefied cooling gas, more preferably a source of liquid nitrogen.

24. An apparatus as claimed in any one of claims 12 to 23, further comprising means for collecting the mixed two or more gas samples from the second container.

25. A method of preparing a mixture of ¹²CF₄ and ¹³CF₄, the method comprising:
(A) providing a first container containing liquid nitrogen;
(B) providing a second container defining a sealed or sealable volume for containing a mixture of ¹²CF₄ and ¹³CF₄, which volume is thermally coupled to the liquid nitrogen in the first container so as to allow heat transfer therebetween;
(C) reducing the pressure in a region of the first container above the liquid nitrogen, whereby the temperature of the liquid nitrogen is reduced to less than -200°C; and
(D) introducing ¹²CF₄ and ¹³CF₄ gas samples into the volume of the second container, wherein said samples are condensed by the action of the liquid nitrogen to the extent that the vapour pressure of the gas samples is negligible.

26. A method of preparing a mixture of two or more gas samples, the method comprising:
(a) providing a first container defining a volume containing a cooling medium, said cooling medium having a temperature T1 at pressure P1;
(b) providing two or more gas samples that exhibit a non-negligible vapour pressure at temperature T1 and negligible vapour pressure at a temperature T2;
(c) providing a second container defining a sealed or sealable volume for containing the two or more gas samples, which volume is thermally coupled to the volume of the first container so as to allow heat transfer therebetween;
(d) adjusting the pressure in the first container above the cooling medium to a pressure P2, whereby the temperature of the cooling medium is altered to T2; and
(e) introducing the two or more gas samples into the volume of the second container, wherein said samples are condensed by the action of the cooling medium.

27. A synthetic mixture consisting of ¹²CF₄ and ¹³CF₄ and essentially free of any isotope fractionation effect.
